# EUROPÄISCHE PATENTSCHRIFT

(11) **EP 2 953 844 B1**
(45) Veröffentlichungstag und Bekanntmachung des Hinweises auf die Patenterteilung: **12.04.2017**
(21) Anmeldenummer: 14701324.7
(22) Anmeldetag: 17.01.2014
(51) Int. Cl.: B62D 55/116, B62D 55/084, B62D 55/075

(54) **FAHRZEUG**
VEHICLE
VÉHICULE

(30) Priorität: 05.02.2013 CH 403132013
(43) Veröffentlichungstag der Anmeldung: 16.12.2015
(73) Patentinhaber: Studer, Eugen, 3631 Höfen b. Thun (CH)
(72) Erfinder: Studer, Eugen, 3631 Höfen b. Thun (CH)
(74) Vertreter: BOVARD AG
(86) Internationale Anmeldenummer: PCT/EP2014/050933
(87) Internationale Veröffentlichungsnummer: WO 2014/121999

(56) Entgegenhaltungen:
- EP-A2- 1 632 132
- JP-A- H06 156 325
- US-A1- 2009 118 913

## Beschreibung

Die vorliegende Erfindung bezieht sich auf ein Fahrzeug, umfassend ein Chassis, auf welchem mindestens ein Hauptantrieb, Arbeitsgeräte und Steuereinheiten angeordnet sind, und mindestens zwei einander gegenüberliegend seitlich am Chassis befestigte und zueinander parallel ausgerichtete Laufwerke, die jeweils einen Träger aufweisen, auf welchem Laufelemente zum Verfahren des Fahrzeugs angebracht sind, wobei pro Laufwerk mindestens eine antreibbare Antriebseinheit vorgesehen ist, mit welchem mindestens ein Laufelement antreibbar ist.

Die EP 1 632 132 A2 offenbart ein solches Fahrzeug. Derartige Fahrzeuge werden in vielfältiger Weise zur Ausführung von Arbeiten im Gelände eingesetzt, sie können sich auch in relativ unwegsamem Gelände fortbewegen. Auf das Chassis von derartigen Fahrzeugen können die verschiedensten Arbeitsgeräte als Aufbauten aufgesetzt werden, beispielsweise kann ein derartiges Arbeitsgerät eine Bohreinrichtung sein, mit welcher im Gelände Sondierbohrungen ausgeführt werden können und mit welchem Bodenproben entnommen werden können. Das Fahrzeug bewegt sich hierzu, angetrieben durch die Antriebseinheiten, über welche die Laufelemente angetrieben werden können, an den entsprechenden Ort, wo die Arbeiten ausgeführt werden müssen.

Derartige Arbeiten müssen auch beispielsweise in Hanglagen vorgenommen werden, je nach Neigung des Hangs ist es für das Fahrzeug nicht ganz einfach, den Einsatzort zu erreichen, da ab einer gewissen Neigung eine Kippgefahr des Fahrzeuges besteht. Zudem muss beispielsweise die Bohreinrichtung auch in der jeweiligen Hanglage senkrecht ausgerichtet werden, was mit zusätzlichen Einrichtungen erreicht werden muss, beispielsweise ausfahrbare und höhenverstellbare Stützelemente. Eine andere Möglichkeit besteht darin, dass die Bohreinrichtung bezüglich des Chassis mit Verstelleinrichtungen ausgestattet ist, mittels welchen die Bohreinrichtung zum Chassis so verstellt werden kann, dass sie senkrecht ausgerichtet ist.

Derartige zusätzliche technische Einrichtungen sind aufwändig und kompliziert in der Bedienung.

Die Aufgabe der vorliegenden Erfindung besteht darin, ein Fahrzeug zu schaffen, bei welchem das Chassis in einfacher Weise in einer im Wesentlichen horizontalen Lage gehalten beziehungsweise gebracht werden kann.

Erfindungsmässig erfolgt die Lösung dieser Aufgabe dadurch, dass am Chassis für jedes Laufwerk der eine Endbereich eines Schwenkhebels um eine erste Achse schwenkbar befestigt ist, dessen anderer Endbereich am Träger des Laufwerks um eine zweite Achse schwenkbar angelenkt ist, und dass zwischen Chassis und Schwenkhebel ein erstes Stellglied und zwischen Schwenkhebel und Träger ein zweites Stellglied angebracht ist.

Mit dieser Ausgestaltung kann das Chassis des Fahrzeuges in eine im Wesentlichen horizontale Lage gebracht werden, bei seitlicher Neigung wird der eine Schwenkhebel mit dem einen Laufwerk ausgefahren, während der andere Schwenkhebel in der eingefahrenen Position bleibt, wodurch eine seitliche Neigung ausgeglichen werden kann, die Laufwerke können auch bezüglich des Schwenkhebels verschwenkt werden, wodurch Steigungen oder Gefälle im Gelände ausgeglichen werden können und auch in diesem Fall das Chassis in einer im Wesentlichen horizontal ausgerichteten Lage gehalten werden kann. Selbstverständlich ist auch eine kombinierte Verstellung der Laufwerke möglich. Dadurch lässt sich das Raupenfahrzeug leicht in unwegsamem Gelände bewegen, die Kippgefahr wird massiv reduziert, zudem kann das Arbeitsgerät in optimaler Weise in die richtige Position zum Gelände gebracht werden.

In vorteilhafter Weise sind die ersten Achsen und die zweiten Achsen parallel zueinander und quer zur Fahrtrichtung des Fahrzeugs ausgerichtet, was ein einfaches Verfahren des Fahrzeuges und ein einfaches Einstellen des Chassis ermöglicht.

In vorteilhafter Weise sind die Stellglieder als Hydraulikzylinder ausgebildet, da insbesondere bei Fahrzeugen mit einer aufgesetzten Bohreinrichtung ohnehin ein Hydrauliksystem vorgesehen ist, ergibt sich dadurch ein einfacher Aufbau.

In vorteilhafter Weise sind die ersten Stellglieder und die zweiten Stellglieder einzeln und unabhängig voneinander verstellbar, wodurch sich ein optimales Ausrichten des Chassis ergibt.

Eine weitere vorteilhafte Ausgestaltung der Erfindung besteht darin, dass an den zweiten Achsen jeweils ein Verschwenkmechanismus angebracht ist, mittels welchem das jeweilige Laufwerk um eine dritte Achse, die quer zur zweiten Achse ausgerichtet ist, verschwenkbar ist. Dadurch kann die Lauffläche jedes Laufwerks bezüglich der entsprechenden Neigung der Geländeoberfläche quer zur Fahrtrichtung ausgerichtet werden, wodurch eine zusätzliche Stabilität des Fahrzeugs erreichbar ist.

In vorteilhafter Weise ist zum Verschwenken der Laufwerke bezüglich der jeweiligen zweiten Achse jeweils ein Hydraulikantrieb vorgesehen, was einen einfachen Aufbau des Verschwenkmechanismus ergibt.

In vorteilhafter Weise ist die Antriebseinheit zum Antreiben der Laufelemente als Hydraulikmotor ausgebildet, auch hier ergibt sich wegen des Vorhandenseins eines Hydrauliksystems auf dem Fahrzeug entsprechend ein einfacher Aufbau.

Eine weitere vorteilhafte Ausgestaltung der Erfindung besteht darin, dass am Chassis ein Sensor angebracht ist, mit welchem die Neigung des Chassis gegenüber der horizontalen Lage feststellbar ist, und dass eine Regeleinrichtung vorgesehen ist, mit welcher die Stellglieder derart ansteuerbar sind, dass das Chassis im Wesentlichen in der horizontalen Lage haltbar ist. Dieses automatische Ausrichten des Chassis erleichtert die Bedienung und das Fortbewegen des Fahrzeuges im Gelände.

Eine Ausführungsform der Erfindung wird nachfolgend anhand der beiliegenden Zeichnung beispielhaft näher erläutert, wobei es sich bei dieser Ausführungsform um ein Fahrzeug handelt, bei welchem die Laufelemente der Laufwerke als Raupen ausgebildet sind.

Es zeigt
Fig. 1 schematisch das Chassis und die daran angeordneten und mit Raupen ausgestatteten Laufwerke eines Fahrzeugs in räumlicher Darstellung, wobei das eine Laufwerk im angehobenen und das andere Laufwerk im abgesenkten Zustand ist;
Fig. 2 in schematischer Darstellung eine Seitenansicht auf das Fahrzeug gemäss Fig. 1, mit zusätzlichem Verschwenkmechanismus für die Laufwerke;
Fig. 3 in schematischer Darstellung eine Ansicht von vorn auf das Fahrzeug gemäss und Fig. 2; und
Fig. 4 in schematischer Darstellung eine Seitenansicht auf das Fahrzeug gemäss Fig. 1, wobei die verschiedenen Positionen der Laufwerke dargestellt sind.

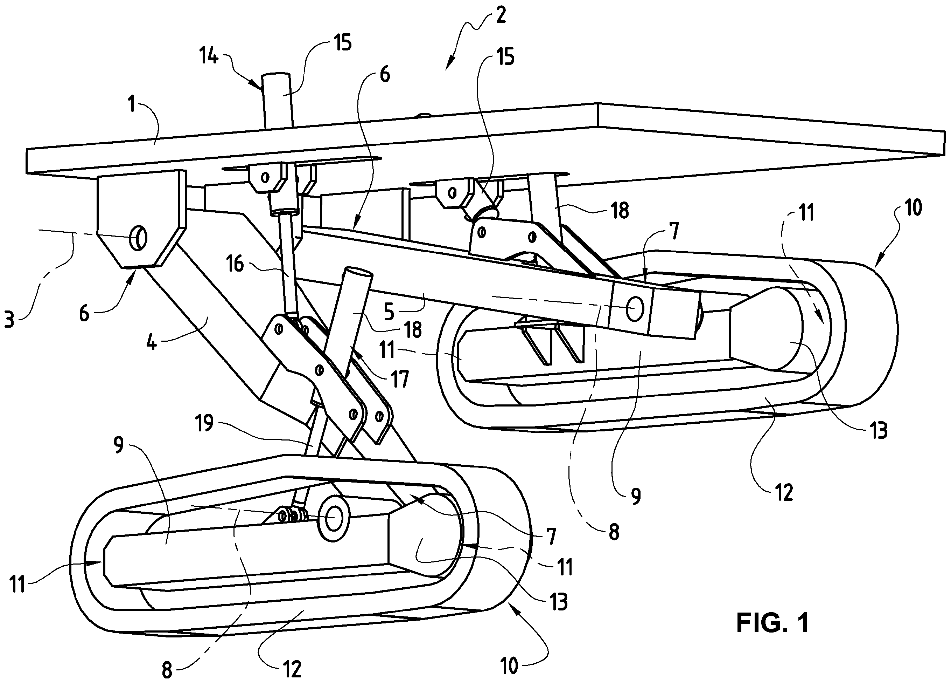

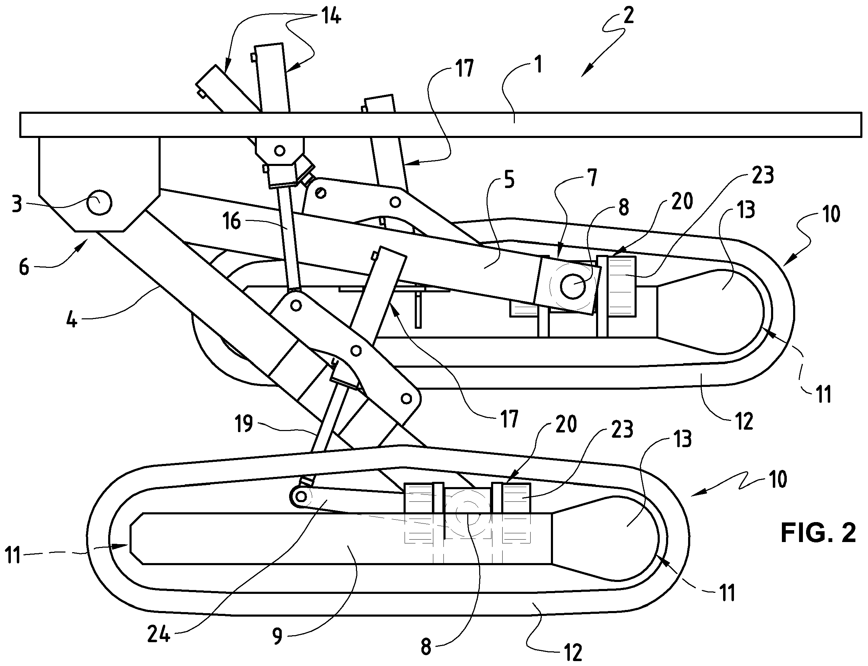

Aus den Figuren 1 und 2 ist das sehr schematisch und vereinfacht dargestellte Chassis 1 des Fahrzeugs 2 zu sehen. In bekannter, nicht dargestellter Weise sind auf dem Chassis die für den Betrieb eines derartigen Fahrzeugs erforderlichen Aggregate angebracht, wie beispielsweise ein Hauptantrieb, Arbeitsgeräte und Steuereinheiten. Beispielsweise kann auf ein derartiges Fahrzeug 2 eine Bohreinrichtung aufgesetzt werden, mit welcher in bekannter Weise im Gelände Sondierbohrungen durchgeführt werden können und mit welchen Bodenproben entnommen werden können. Als Hauptantrieb dient beispielsweise ein Dieselmotor, mit welchem eine Hydraulikpumpe eines Hydrauliksystems angetrieben werden kann.

Am Chassis 1 ist eine erste Achse 3 befestigt, um diese erste Achse 3 sind zwei nebeneinander angeordnete Schwenkhebel 4, 5 schwenkbar, wobei jeweils der eine Endbereich 6 dieser Schwenkhebel 4 und 5 in bekannter Weise mit entsprechenden Lagern ausgestattet ist. Am jeweiligen anderen Endbereich 7 der beiden Schwenkhebel 4 und 5 ist eine zweite Achse 8 angebracht, um welche jeweils ein Träger 9 eines Laufwerks 10 schwenkbar gelagert ist. Im hier dargestellten Ausführungsbeispiel sind die Laufelemente 12 als Raupen ausgebildet, die nachfolgend und in den Figuren als Raupen benannt und jeweils mit dem Bezugszeichen 12 versehen sind. Der Träger 9 ist hierzu in bekannter, nicht dargestellter Weise an den jeweiligen Endbereichen mit einem Umlenkelement 11 versehen, das beispielsweise als Rad ausgebildet ist, auf welche eine endlose Raupe 12 aufgelegt ist. Diese beiden Raupen 12 können beispielsweise über am Träger 9 angebrachte Hydraulikmotoren 13 angetrieben werden.

Zwischen dem Chassis 1 und dem jeweiligen Schwenkhebel 4, 5 ist jeweils ein erstes Stellglied 14 angeordnet, das als Hydraulikzylinder 15 ausgebildet ist. Durch Ausfahren der Kolbenstange 16 des Hydraulikzylinders 15 lässt sich, wie in Fig. 1 linksseitig ersichtlich ist, der Schwenkhebel 4 in eine ausgefahrene Position bringen. Beim Einziehen der Kolbenstange 16 des Hydraulikzylinders 15 für den Schwenkhebel 5 lässt sich der Schwenkhebel 5 in die hochgefahrene Position bringen, wie in Fig. 1 rechtsseitig dargestellt ist.

Zwischen dem jeweiligen Träger 9 und dem entsprechenden Schwenkhebel 4 beziehungsweise 5 ist ein zweites Stellglied 17 eingesetzt, das ebenfalls als Hydraulikzylinder 18 ausgebildet ist. Durch Ausfahren der Kolbenstange 19 des Hydraulikzylinders 18 lässt sich der Träger 9 und somit das Laufwerk 10 bezüglich des Schwenkhebels 4 aufschwenken, wie dies in Fig. 1 linksseitig dargestellt ist, beim Einziehen der Kolbenstange 19 des Hydraulikzylinders 18 wird der Träger 9 und demzufolge das Laufwerk 10 zum Schwenkhebel 5 zugeschwenkt, wie dies rechtsseitig in Fig. 1 dargestellt ist.

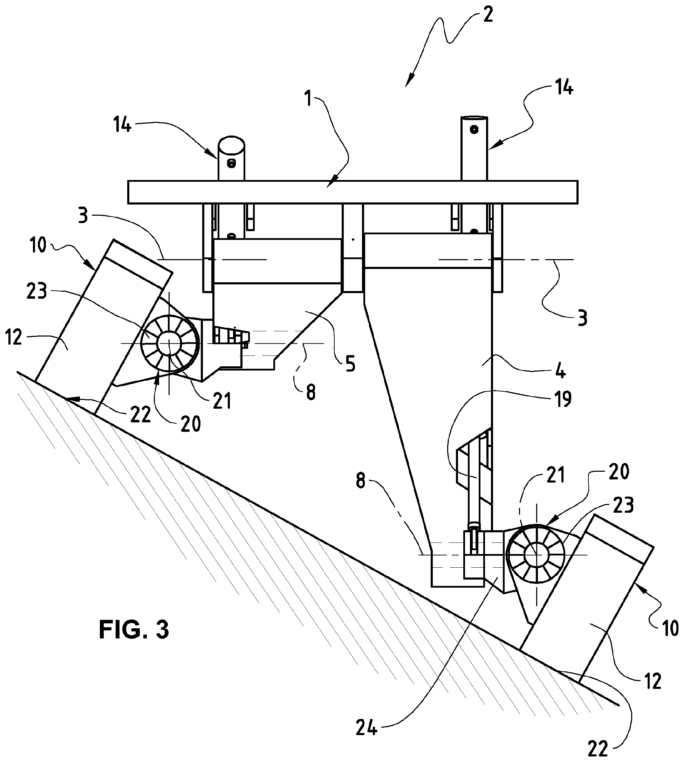

Wie aus Fig. 3 ersichtlich ist, kann durch diese Verstellmöglichkeiten der Laufwerke 10 das Fahrzeug 2 quer zu geneigten Hängen verfahren, das hangaufwärts liegende Laufwerk 10 wird über das Hochschwenken des Schwenkhebels 5 in die eingezogene Position gebracht, das hangabwärts liegende Laufwerk 10 wird über den ausgeschwenkten Schwenkhebel 4 in die ausgefahrene Position gebracht, das Chassis 1 des Fahrzeugs 2 kann dadurch in einer relativ horizontalen Lage gehalten werden.

Aus den Fig. 2 und Fig. 3 ist entnehmbar, dass jeweils zwischen der zweiten Achse 8 und dem entsprechenden Laufwerk 10 ein Verschwenkmechanismus 20 eingesetzt werden kann. Dieser Verschwenkmechanismus 20 ermöglicht, dass jedes Laufwerk 10 bezüglich der zweiten Achse 8 verschwenkbar ist, und zwar um eine dritte Achse 21, die quer zur zweiten Achse 8 ausgerichtet ist. Diese Verschwenkbarkeit der Laufwerke 10 ermöglicht, wie insbesondere aus Fig. 3 ersichtlich ist, dass die Lauffflächen 22 der Laufelemente, beispielsweise der Raupen 12, an die Neigung der Geländeoberfläche quer zur Fahrtrichtung des Fahrzeugs ausgerichtet werden können, so dass die Laufflächen 22 flach auf der Geländeoberfläche aufliegen können und dadurch die Stabilität des Fahrzeugs im Gelände verbessert wird. Das Verschwenken der Laufwerke 10 kann durch jeweils einen Hydraulikmotor 23 erreicht werden, selbstverständlich sind auch andere geeignete Verstellmechanismen denkbar.

Wie insbesondere aus Fig. 2 ersichtlich ist, kann, wenn die oben beschriebenen Verschwenkmechanismus 20 am Fahrzeug angebracht sind, an der zweiten Achse 8 ein Schwenkhebel 24 befestigt sein, an der zweiten Achse 8 ist ebenfalls das Laufwerk 10 befestigt, die zweite Achse 8 ist im Schwenkhebel 4 beziehungsweise im Schwenkhebel 5 drehbar gelagert. Am Schwenkhebel 24 ist die Kolbenstange 19 des Hydraulikzylinders 18 des zweiten Stellgliedes 17 angelenkt.

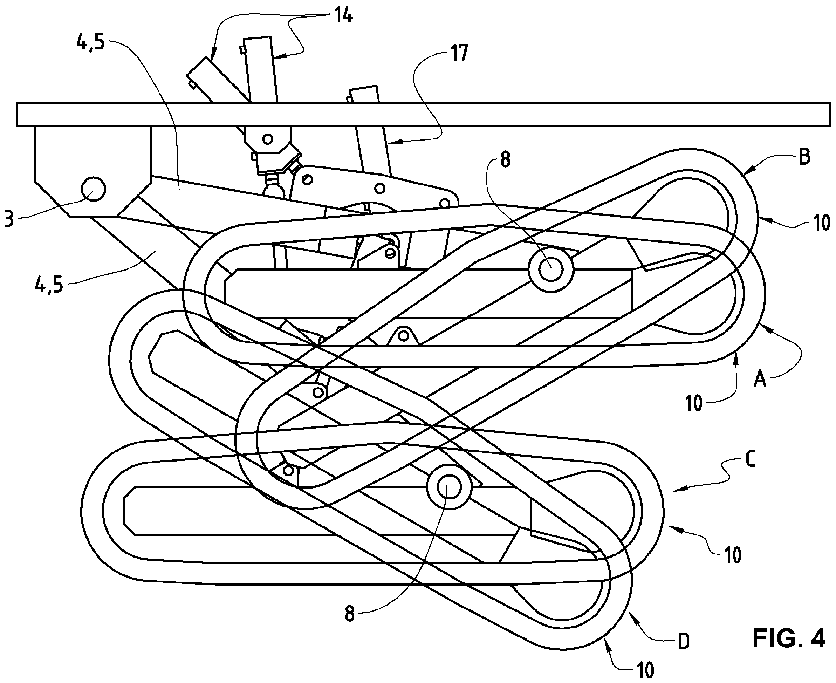

Aus Fig. 4 sind unterschiedliche Positionen der Laufwerke 10 ersichtlich. Die Position A zeigt das Laufwerk 10 bei hochgezogener Position des Schwenkhebels 4 beziehungsweise 5, das heisst das erste Stellglied 14 befindet sich in der eingefahrenen Position. Das zweite Stellglied 17 befindet sich ebenfalls in der eingefahrenen Position, das Laufwerk 10 ist in dieser Position A im Wesentlichen parallel zum Chassis 1 ausgerichtet.

Die Position B zeigt das Laufwerk 10 ebenfalls bei hochgeschwenktem Schwenkhebel 4 beziehungsweise 5, das zweite Stellglied 17 befindet sich aber in der ausgefahrenen Position, das Laufwerk 10 ist somit bezüglich des Chassis 1 in einer geneigten Position. Wenn sich beide Laufwerke 10 in dieser Position befinden, kann beispielsweise das Fahrzeug 2 hangaufwärts oder hangabwärts fahren, das Chassis 1 befindet sich auch hier in einer im Wesentlichen horizontalen Lage.

Um das Laufwerk 10 in die Position C zu bringen, wird der jeweilige Schwenkhebel 4 beziehungsweise 5 über das erste Stellglied 14 in die herunter geschwenkte Position gebracht, das zweite Stellglied 17 wird in eine ausgefahrene Position gebracht, sodass das Laufwerk 10 sich in einer zum Chassis 1 im Wesentlichen parallelen Ausrichtung befindet, weist aber im Gegensatz zur Position A vom Chassis 1 einen grösseren Abstand auf. In der ausgeschwenkten Position der Schwenkhebel 4 beziehungsweise 5 kann das zweite Stellglied 17 in die eingefahrene Position gebracht werden, das Laufwerk 10 gelangt dann in die Position D. Auch in dieser Position kann beispielsweise das Fahrzeug 2 hangaufwärts oder hangabwärts fahren, wobei sich das Chassis 1 im Wesentlichen in einer horizontalen Lage befindet.

Durch diese Verstellmöglichkeiten der beiden Laufwerke 10 eines Fahrzeugs 2 können im Gelände Hänge überwunden werden oder geneigte Hänge überfahren werden, das Chassis 1 kann durch entsprechendes Einstellen der jeweiligen Laufwerke 10 praktisch immer in horizontaler Lage gehalten werden, wodurch die Kippgefahr des Fahrzeugs massiv verkleinert werden kann.

Selbstverständlich wäre es denkbar, dass am Chassis 1 ein nicht dargestellter, bekannter Sensor angebracht ist, mit welchem die Neigung des Chassis 1 gegenüber der horizontalen Lage feststellbar ist, und dass in bekannter, nicht dargestellter Weise eine Regeleinrichtung vorgesehen werden kann, die auf dem Chassis angeordnet werden kann, mit welcher die Stellglieder 14 und 17 derart ansteuerbar sind, dass das Chassis 1 im Wesentlichen in der horizontalen Lage haltbar ist, auch wenn sich das Fahrzeug in wechselndem Gelände bewegt.

Wenn das Fahrzeug 2 den gewünschten Punkt im Gelände erreicht hat, kann das Chassis durch entsprechendes Verstellen der Laufwerke 10 in die gewünschte Position ausgerichtet werden, damit beispielsweise ein korrekter Bohrvorgang ausgeführt werden kann.

Beim vorgängig beschriebenen Ausführungsbeispiel sind die Laufelemente 12 als Raupen ausgebildet. Selbstverständlich ist auch denkbar, dass die Laufelemente 12 anders ausgebildet sind, beispielsweise als Räder. Hierbei können die Räder in bekannter Weise am jeweiligen Laufwerk angebracht sein, wobei pro Laufwerk mehrere Räder vorgesehen sein können, die auch lenkbar sein können. Als Räder können Pneuräder eingesetzt werden, selbstverständlich sind aber auch andere geeignete Räder einsetzbar.

Mit dieser erfindungsgemässen Ausrüstung eines Fahrzeugs kann dieses sehr geländegängig gemacht werden, insbesondere wird es dadurch auch möglich, das Chassis vordem vorzunehmenden Arbeitsvorgang in die richtige Position auszurichten.

## Patentansprüche

1. Fahrzeug, umfassend ein Chassis (1), auf welchem mindestens ein Hauptantrieb, Arbeitsgeräte und Steuereinheiten angeordnet sind, und mindestens zwei einander gegenüberliegend seitlich am Chassis (1) befestigte und zueinander parallel ausgerichtete Laufwerke (10), die jeweils einen Träger (9) aufweisen, auf welchen Laufelemente (12) zum Verfahren des Fahrzeugs (2) angebracht sind, wobei pro Laufwerk (10) mindestens eine antreibbare Antriebseinheit (13) vorgesehen ist, mit welchem mindestens ein Laufelement (12) antreibbar ist, **dadurch gekennzeichnet, dass** am Chassis (1) für jedes Laufwerk (10) der eine Endbereich (6) eines Schwenkhebels (4, 5) um eine erste Achse (3) schwenkbar befestigt ist, dessen anderer Endbereich (7) am Träger (9) um eine zweite Achse (8) schwenkbar angelenkt ist, dass zwischen Chassis (1) und Schwenkhebel (4, 5) ein erstes Stellglied (14) und zwischen Schwenkhebel (4, 5) und Träger (9) ein zweites Stellglied (17) angebracht ist.

2. Fahrzeug nach Anspruch 1, **dadurch gekennzeichnet, dass** die ersten Achsen (3) und die zweiten Achsen (8) parallel zueinander und quer zur Fahrtrichtung des Fahrzeugs (2) ausgerichtet sind.

3. Fahrzeug nach Anspruch 1 oder 2, **dadurch gekennzeichnet, dass** die Stellglieder (14 bzw. 17) als Hydraulikzylinder (15 bzw. 18) ausgebildet sind.

4. Fahrzeug nach einem der Ansprüche 1 bis 3, **dadurch gekennzeichnet, dass** die ersten Stellglieder (14) und die zweiten Stellglieder (17) einzeln und unabhängig voneinander verstellbar sind.

5. Fahrzeug nach einem der Ansprüche 1 bis 4, **dadurch gekennzeichnet, dass** an den zweiten Achsen (8) jeweils ein Verschwenkmechanismus (20) angebracht ist, mittels welchem das jeweilige Laufwerk (10) um eine dritte Achse (21), die quer zur zweiten Achse (8) ausgerichtet ist, verschwenkbar ist.

6. Fahrzeug nach Anspruch 5, **dadurch gekennzeichnet, dass** zum Verschwenken der Laufwerke (10) bezüglich der jeweiligen dritten Achse (21) jeweils ein Hydraulikantrieb, insbesondere Hydraulikmotor (23), vorgesehen ist.

7. Fahrzeug nach einem der Ansprüche 1 bis 6, **dadurch gekennzeichnet, dass** die Antriebseinheit zum Antreiben mindestens eines Laufelements (12) als Hydraulikmotor (13) ausgebildet ist.

8. Fahrzeug nach einem der Ansprüche 1 bis 7, **dadurch gekennzeichnet, dass** am Chassis (1) ein Sensor angebracht ist, mit welchem die Neigung des Chassis (1) gegenüber der horizontalen Lage feststellbar ist, und dass eine Regeleinrichtung vorgesehen ist, mit welcher die Stellglieder (14, 17) derart ansteuerbar sind, dass das Chassis (1) im wesentlichen in der horizontalen Lage haltbar ist.

## Claims

1. Vehicle, comprising a chassis (1), on which are disposed at least one primary drive, working devices and control units, and at least two running gears (10) fastened opposite each other laterally on the chassis (1) and aligned parallel to one another, which each have a carrier (9), on which are attached running elements (12) for driving the vehicle (2), at least one drivable drive unit (13) being provided per running gear (10), with which at least one running element (12) is drivable, **characterized in that**, on the chassis (1), for each running gear (10), the one end region (6) of a pivot lever (4, 5) is attached in a way pivotable about a first shaft (3), whose other end region (7) is linked on the carrier (9) in a way pivotable about a second shaft (8), **in that** attached between chassis (1) and pivot lever (4, 5) is a first actuator (14) and between pivot lever (4, 5) and carrier (9) is a second actuator (17).

2. Vehicle according to claim 1, **characterized in that** the first shafts (3) and the second shafts (8) are aligned parallel to one another and transversely to the driving direction of the vehicle (2).

3. Vehicle according to claim 1 or 2, **characterized in that** the actuators (14 or respectively 17) are designed as hydraulic cylinders (15 or respectively 18).

4. Vehicle according to one of the claims 1 to 3, **characterized in that** the first actuators (14) and the second actuators (17) are adjustable individually and independently of one another.

5. Vehicle according to one of the claims 1 to 4, **characterized in that** attached to each of the second shafts (8) is a pivot mechanism (20), by means of which the respective running gear (10) is pivotable about a third shaft (21), which is aligned transversely to the second shaft (8).

6. Vehicle according to claim 5, **characterized in that** for pivoting of the running gears (10) with respect to the respective third shaft (21) a hydraulic drive is provided in each case, in particular a hydraulic motor (23).

7. Vehicle according to one of the claims 1 to 6, **characterized in that** the drive unit for driving at least one running element (12) is designed as hydraulic motor (13).

8. Vehicle according to one of the claims 1 to 7, **characterized in that** installed on the chassis (1) is a sensor, with which the inclination of the chassis (1) with respect to the horizontal position is detectable, and **in that** a control device is provided with which the actuators (14, 17) are controllable in such a way that the chassis (1) is able to be kept substantially in the horizontal position.

## Revendications

1. Véhicule comprenant un châssis (1), sur lequel sont agencés au moins une transmission principale, des outils de travail et des unités de contrôle, et au moins deux trains de roulement (10) fixés à l'opposé les uns des autres latéralement sur le châssis (1) et alignés parallèlement les uns aux autres, qui contiennent chacun un support (9), sur lequel sont disposés des éléments de roulement (12) pour faire avancer le véhicule (2), au moins une unité motrice d'entraînement (13) étant prévue par train de roulement (10), grâce à laquelle au moins un élément de roulement (12) peut être entraîné, **caractérisé en ce que**, sur le châssis (1), pour chaque train de roulement (10), l'une des extrémités (6) d'un levier de pivotement (4, 5) est fixée de manière pivotante autour d'un premier arbre (3), dont l'autre extrémité (7) est couplée au support (9) de manière pivotante autour d'un deuxième arbre (8), **en ce qu'**un premier actionneur (14) est disposé entre le châssis (1) et le levier de pivotement (4,5) et un deuxième actionneur (17) est disposé entre le levier de pivotement (4 5) et le support (9).

2. Véhicule selon la revendication 1, **caractérisé en ce que** le premier arbre (3) et le deuxième arbre (8) sont alignés parallèlement l'une à l'autre et transversalement par rapport à la direction de conduite du véhicule (2).

3. Véhicule selon la revendication 1 ou 2, **caractérisé en ce que** les actionneurs (14 ou respectivement 17) sont conçus comme des cylindres hydrauliques (15 ou respectivement 18).

4. Véhicule selon l'une des revendications 1 à 3, **caractérisé en ce que** les premiers actionneurs (14) et deuxièmes actionneurs (17) sont ajustables individuellement et indépendamment les uns des autres.

5. Véhicule selon l'une des revendications 1 à 4, **caractérisé en ce qu'**un mécanisme de pivotement (20) est disposé respectivement au niveau de chacun des deuxièmes arbres (8), au moyen duquel le train de roulement (10) respectif peut être pivoté autour d'un troisième arbre (21), qui est dirigé transversalement par rapport au deuxième arbre (8).

6. Véhicule selon la revendication 5, **caractérisé en ce qu'**une transmission hydraulique, et en particulier un moteur hydraulique (23), est prévue pour le pivotement des trains de roulement (10) par rapport au troisième arbre respectif (21).

7. Véhicule selon l'une des revendications 1 à 6, **caractérisé en ce que** l'unité motrice pour l'entraînement d'au moins un élément de roulement (12) est conçu comme moteur hydraulique (13).

8. Véhicule selon l'une des revendications 1 à 7, **caractérisé en ce qu'**un capteur est installé sur le châssis (1), grâce auquel on peut détecter l'inclinaison du châssis (1) par rapport à la position horizontale, et **en ce qu'**un dispositif de contrôle est prévu, par l'intermédiaire duquel les actionneurs (14, 17) peuvent être ajustés de telle sorte que le châssis (1) peut être maintenu substantiellement en position horizontale.
